(19) **Europäisches Patentamt / European Patent Office / Office européen des brevets**

(11) **EP 1 376 051 B1**

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(51) Int Cl.:
*G01B 11/00* (2006.01)  *G01D 18/00* (2006.01)
*G01C 21/00* (2006.01)  *B60R 21/00* (2006.01)

(21) Anmeldenummer: **03007654.1**

(22) Anmeldetag: **03.04.2003**

(54) **Kalibrierung eines Bildsensorsystems an einem Kraftfahrzeug mit Kalibrierobjekt und Lagebezugssensor**

Calibration of an image sensing system on a vehicle with a calibration object and a relative position sensor

Calibration d'un système de capteur d'images monté sur un véhicule par un objet de calibration et un capteur de position relative

(84) Benannte Vertragsstaaten:
**DE FR GB IT**

(30) Priorität: **29.06.2002 DE 10229336**

(43) Veröffentlichungstag der Anmeldung:
**02.01.2004 Patentblatt 2004/01**

(73) Patentinhaber: **ROBERT BOSCH GMBH**
**70442 Stuttgart (DE)**

(72) Erfinder: **Abraham, Steffen**
**31134 Hildesheim (DE)**

(56) Entgegenhaltungen:
**DE-A- 19 962 997**      **US-A- 5 809 658**
**US-A- 5 978 081**

**Beschreibung**

Stand der Technik

Die Erfindung betrifft ein Verfahren und eine Vorrichtung zur Kalibrierung wenigstens eines Bildsensorsystems, das sich vorzugsweise in einem Kraftfahrzeug befindet.

In Kraftfahrzeugen ist an den Einsatz von Bildsensorsystemen beispielsweise zur Erfassung des Fahrzeugumfeldes oder des Fahrzeuginnenraumes gedacht. Insbesondere ist die Verwendung der Bildsensorsysteme in Fahrerassistenzsystemen geplant. Beispielsweise ist es möglich, Bildsensorsysteme zur automatische Abstandsregelung des Kraftfahrzeuges zu einem vorausfahrenden Fahrzeug einzusetzen. Im Fahrzeuginnenraum ist der Einsatz von Bildsensorsystemen zur Steuerung der Auslösung von Airbags vorgesehen. Insbesondere kann das Bildsensorsystem hierbei zur Überprüfung der Sitzbelegung verwendet werden.

Zur Vergrößerung des Bilderfassungsbereiches ist der Einsatz von mehreren Bildsensorsystemen im Kraftfahrzeug geplant, wobei sich deren Erfassungsbereiche zumindest teilweise überlappen können. Insbesondere ist der Einsatz von Stereokameras vorgesehen, die aus zwei Bildsensorsystemen bestehen, welche im wesentlichen dieselbe Szene aufnehmen.

Es ist bekannt, dass zur Bestimmung von geometrischen Daten im Kraftfahrzeugumfeld durch Bildsensorsysteme deren Kalibrierung erforderlich ist. Dabei werden extrinsische und intrinsische Kalibrierdaten ermittelt. Extrinsische Kalibrierdaten sind beispielsweise die Position und Orientierung des Bildsensorsystems zum Kraftfahrzeug, während intrinsische Kalibrierdaten die optische Abbildung innerhalb des Bildsensorsystems beschreiben.

Aus der deutschen Offenlegungsschrift DE 199 62 997 A1 ist ein Verfahren zur Kalibrierung eines Sensorsystems bekannt, wobei Objekte im Kursverlauf des Fahrzeugs erfasst werden und die charakteristischen Daten der Objekte einer Kalibriereinheit zugeführt werden. Als Sensoren werden eine Kamera und ein Radarsensor vorgeschlagen.

Vorteile der Erfindung

Das nachfolgend beschriebene Verfahren und die Vorrichtung zur Kalibrierung eines Bildsensorsystems, das sich vorzugsweise an einem Kraftfahrzeug befindet, hat den Vorteil, dass durch die Verwendung eines Wertes, der die Lage und/oder die Ausrichtung des Testfeldes und des Bildsensorsystems zueinander repräsentiert, die Genauigkeit der Kalibrierung erhöht wird. Damit werden anderseits gegebene Genauigkeitsanforderungen an die Kalibrierung und die Kalibrierdaten mit weniger Aufwand erfüllt. In der Kraftfahrzeugfertigung und in der Kraftfahrzeugwerkstatt führt dies zu einer Zeit- und Kosteneinsparung. Gleichzeitig wird in vorteilhafter Weise die notwendige Rechenleistung der Auswerteeinheit, die vorzugsweise durch einen Mikroprozessor realisiert ist und die Kalibrierdaten ermittelt, reduziert. Dies führt ebenfalls zu einer Kosteneinsparung.

Bei Verwendung eines Wertes, der die Lage und/oder die Ausrichtung des Testfeldes und des Bildsensorsystems zueinander repräsentiert, die exakte Positionierung des Bildsensorsystems bezüglich des Testfeldes. Insbesondere wird in der Kraftfahrzeugfertigung und in der Kraftfahrzeugwerkstatt bei der Kalibrierung eines Bildsensorsystems in einem Kraftfahrzeug die genaue Fahrzeugpositionierung überflüssig. Eine genaue Fahrzeugpositionierung erfolgt ansonsten durch technisch aufwendige Lösungen, wie beispielsweise einem Achsmessstand. In der Fahrzeugfertigung werden durch das nachfolgend beschriebene Verfahren und die Vorrichtung Kosten gespart, weil die Verwendung von Vorrichtungen zur Fahrzeugpositionierung, wie dem Achsmessstand, unnötig wird. In der Kraftfahrzeugwerkstatt sind anderseits oftmals keine Einrichtungen zur exakten Fahrzeugpositionierung vorhanden. In vorteilhafter Weise wird durch das nachfolgend beschriebene Verfahren und die Vorrichtung zur Kalibrierung eines Bildsensorsystems in einem Kraftfahrzeug die Kalibrierung in einer Kraftfahrzeugwerkstatt mit geringerem technischen Aufwand, insbesondere ohne einen Achsmessstand, ermöglicht.

Die Verwendung eines Lagebezugsensors ermöglicht eine technisch einfache Lösung zur Kalibrierung eines Bildsensorsystems. Durch die Verwendung der Messwerte des Lagebezugsensors wird eine automatische Kalibrierung des Bildsensorsystems, das sich an einem Kraftfahrzeug befindet, oder die Ermittlung von Kalibrierdaten ermöglicht. Dies spart technischen Aufwand und führt dadurch zu einer Kostenverringerung.

Das Testfeld weist Kalibrierbezugmerkmale auf, wobei die Kalibrierbezugmerkmale so beschaffen sind, das es zur Aufnahme durch das Bildsensorsystem geeignet ist. Durch einen großen Kontrast und/oder eine reflektierende Oberfläche und/oder eine besondere Form, wie beispielsweise eine Kreis- oder Quadratform, wird eine automatische Erfassung der Kalibrierbezugmerkmale durch das Bildsensorsystem und die nachfolgende Identifikation der Kalibrierbezugmerkmale durch die Auswerteeinheit ermöglicht.

Testfelder zeichnen sich durch eine geometrisch bekannte Gestaltung aus, die eine einfache, automatische und hochpräzise Auswertung der aufgenommenen Bilder durch das Bildsensorsystem ermöglichen. Insbesondere ermöglicht das vorgeschlagene Verfahren und die Vorrichtung zur Kalibrierung eines Bildsensorsystems, das sich an einem Kraftfahrzeug befindet, in vorteilhafter Weise die Verwendung von geometrisch ebenen Testfeldern. In vorteilhafter Weise ist die Bestimmung von intrinsischen Kalibrierdaten aus einer einzigen Abbildung, also einem einzigen Bilddatensatz, bei Verwendung eines ebenen Testfeldes möglich. Ebene Testfelder weisen Vorteile in der Handhabung, der Herstellung und durch den geringen Platzbedarf bei der Lagerung auf. Dies führt zu einer Reduzierung von Aufwand und Kosten bei der Kalibrierung des Bildsensorsystems, das sich an einen Kraftfahrzeug befindet. Besonders vorteilhaft ist die Realisierung eines ebenen Testfeldes beispielsweise an der Wand einer Kraftfahrzeugwerkstatt, indem man das gesamte Testfeld auf die Wand der Kraftfahrzeugwerkstatt montiert.

Die räumliche geometrische Anordnung der Kalibrierbezugmerkmale, insbesondere als Parameter $P_{3D}$ und/oder als Parameter $P_T$, ist bekannt. Insbesondere beim Einsatz des Verfahrens und der Vorrichtung in einem Kraftfahrzeug ist der Parameter $P_{3D}$ und/oder der Parameter $P_T$ in vorteilhafter Weise in der Auswerteeinheit abgespeichert oder kann beispielsweise durch ein Diagnosegerät eingelesen werden. Das Einlesen der Parameter $P_{3D}$ und/oder der Parameter $P_T$ bietet die Möglichkeit, das Testfeld zu verändern, ohne die gesamte Auswerteeinheit wechseln zu müssen. Insbesondere ist es möglich unterschiedlich große Testfelder zu verwenden und die zugehörige Daten einfach über eine Signalleitung in die Auswerteeinheit vor der Durchführung des Kalibriervorganges einzulesen.

In vorteilhafter Weise wird als Wert, der die Lage und/oder die Ausrichtung des Testfeldes und des Bildsensorsystems zueinander repräsentiert, die Entfernung des Testfeldes zum Bildsensorsystem verwendet und durch einen Radarsensor im Kraftfahrzeug ermittelt. Durch die Bestimmung der Entfernung zwischen dem Bildsensorsystem und dem Testfeld bei der Kalibrierung des Bildsensorsystems beispielsweise in einem Kraftfahrzeug wird in besonders vorteilhafter Weise die Genauigkeit der Bestimmung der intrinsischen Kalibrierdaten und die Genauigkeit der Bestimmung der extrinsischen Kalibrierdaten, insbesondere der Position und Orientierung von zwei Bildsensorsystemen zueinander, erhöht. Dieser Vorteil wird dadurch verstärkt, dass die Entfernung zwischen dem Testfeld und dem Bildsensorsystem einfach und genau zu messen ist.

In einer Variante des nachfolgend beschriebenen Verfahrens wird als Wert, der die Lage und/oder die Ausrichtung des Testfeldes und des Bildsensorsystems zueinander repräsentiert, die Position des Testfeldes zum Bildsensorsystem verwendet und durch einen Radarsensor im Kraftfahrzeug, ermittelt. Die Ermittlung der Position erhöht in vorteilhafter Weise die Genauigkeit der Kalibrierung.

In besonders vorteilhafter Weise wird in wenigstens zwei unterschiedlichen Positionen des Testfeldes in Bezug zum Bildsensorsystem jeweils wenigstens ein Bilddatensatz durch das Bildsensorsystem aufgenommen. Bei Verwendung jeweils eines Wertes, der die Lage und/oder die Ausrichtung des Testfeldes und des Bildsensorsystems zueinander repräsentiert, wird die Genauigkeit der Kalibrierung erhöht. Bei der Kalibrierung von des Bildsensorsystem an einem Kraftfahrzeug wird durch die Verwendung von Messdaten von Sensoren, welche die Fahrzeugbewegung zwischen den wenigstens zwei unterschiedlichen Positionen messen, die Genauigkeit der Kalibrierung in vorteilhafter Weise gesteigert. Besonders vorteilhaft ist hierbei die Verwendung von Messdaten von Radsensoren und/oder Lenkwinkelsensoren.

In vorteilhafter Weise ermöglicht das Verfahren die Bestimmung von Kalibrierdaten des Bildsensorsystems, wobei sich das Bildsensorsystem an einem Kraftfahrzeug befindet. Insbesondere ist die Bestimmung

- der geometrischen Position des wenigstens einen Bildsensorsystems in Bezug zum Kraftfahrzeug und/oder
- des Nickwinkels des wenigstens einen Bildsensorsystems in Bezug zur Fahrachse des Kraftfahrzeugs und/oder
- des Gierwinkels des wenigstens einen Bildsensorsystems in Bezug zur Fahrachse des Kraftfahrzeugs und/oder
- des Wankwinkels des wenigstens einen Bildsensorsystems in Bezug zur Fahrachse des Kraftfahrzeugs und/oder
- der Kamerakonstante des wenigstens einen Bildsensorsystems und/oder
- des Kamerahauptpunktes des wenigstens einen Bildsensorsystems und/oder
- eines Verzeichnisparameters des Bildsensorsystems möglich.

Insbesondere ermöglicht das nachfolgend beschriebene Verfahren und die Vorrichtung in besonders vorteilhafter Weise die genaue Bestimmung der intrinsischen Kalibrierdaten, also der Kamerakonstante und/oder des Kamerahauptpunktes und/oder eines Verzeichnisparameters des Bildsensorsystems.

In besonders vorteilhafter Weise ermöglicht das Verfahren die Bestimmung der Kalibrierdaten von wenigstens zwei Bildsensorsystemen, wobei hierbei als Kalibrierdaten zusätzlich die Position und/oder die Orientierung der Bildsensorsysteme zueinander ermittelt werden. Insbesondere in Kraftfahrzeugen mit Stereokameras, die aus zwei Bildsensorsystemen bestehen, welche im wesentlichen dieselbe Szene aufnehmen, ermöglicht das nachfolgend beschriebenen Verfahren und die Vorrichtung deren Kalibrierung. Die Vorrichtung und das Verfahren ermöglichen dabei die Bestimmung von Kalibrierdaten zur Korrektur der Abweichung der Position und/oder der Ausrichtung der beiden Bildsensorsysteme der Stereokamera zueinander von deren Sollposition und/oder Sollausrichtung.

Vorteilhaft ist die Auswertung und/oder Weiterverarbeitung und/oder Anzeige und/oder Übertragung und/oder Speicherung der ermittelten Kalibrierdaten insbesondere durch nachfolgende Systeme. In besonders vorteilhafter Weise können die ermittelten Kalibrierdaten zur Korrektur der Bildsensorsysteme direkt verwendet werden. Diese Korrektur kann mechanisch, also beispielsweise durch Verstellung der Einbauposition des Bildsensorsystems im Kraftfahrzeug, und/oder durch elektronische Korrektur der aufgenommenen Bilder durch das Bildsensorsystem erfolgen. Die Anzeige der ermittelten Kalibrierdaten beispielsweise auf einer Anzeige in der Kraftfahrzeugwerkstatt ermöglicht in vorteilhafter Weise die visuelle Kontrolle des Kalibriervorganges durch den Kraftfahrzeugmechaniker. Durch die Übertragung der ermittelten Kalibrierdaten wird eine vorzugsweise elektronische Verbreitung der Daten ermöglicht. Die Übertragung kann dabei drahtgebunden, beispielsweise über elektrische Leitungen, und/oder materialunabhängig, wie beispielsweise Licht oder Funk, erfolgen. Weiterhin bietet die Speicherung der Kalibrierdaten den Vorteil, dass die Durchführung der Kalibrierung automatisch dokumentiert wird.

Die Nutzung wenigstens eines am Kraftfahrzeug bereits vorhandenen Radarsensors zur Bestimmung eines Wertes, der die Lage und/oder die Ausrichtung des Testfeldes und des Bildsensorsystems zueinander repräsentiert, verringert in vorteilhafter Weise den Aufwand für den Kalibriervorgang gegenüber der Kalibrierung mit einer Einrichtung zur Kraftfahrzeugpositionierung oder einer Messung der Position des Kraftfahrzeuges mit zusätzlichem Lagebezugsensor. Radarsensoren werden in Kraftfahrzeugen bei Tempomaten mit integrierter Abstandsregelung, die als Adaptive Cruise Control bezeichnet werden, als Positions- oder Entfernungsmesssysteme eingesetzt. Die Nutzung eines solchen fahrzeugeigenen Lagebezugsensors zur Kalibrierung des wenigstens einen Bildsensorsystems im Kraftfahrzeug führt zu Synergieeffekten, die zu einer Reduzierung der Kosten zur Kalibrierung des wenigstens einen Bildsensorsystems führen. Insbesondere ist der Aufwand für das Bedienpersonal, die technische Ausrüstung und der Zeitbedarf in der Kraftfahrzeugwerkstatt zur Durchführung des Kalibrierverfahrens gering, weil keine Einrichtung zur Kraftfahrzeugpositionierung und/oder zusätzliche Lagebezugsensoren benötigt werden.

Vorteilhaft ist die Verwendung eines Lagebezugmerkmals zur Kalibrierung des Bildsensorsystems an einem Kraftfahrzeug, wobei sich das Lagebezugmerkmal an dem Testfeld befindet und das Lagebezugmerkmal zur Bestimmung des Wertes, der die Lage und/oder die Ausrichtung des Testfeldes und des Bildsensorsystems zueinander repräsentiert, durch den Lagebezugsensor geeignet ist. Beim Einsatz des nachfolgend beschriebenen Verfahrens und der Vorrichtung in einem Kraftfahrzeug mit einem Radarsensor wird als Lagebezugmerkmal ein Triple-Spiegel verwendet. Triple-Spiegel eigenen sich insbesondere zur Bestimmung von Positions- und Entfernungsdaten durch einen Radarsensor.

Vorteilhaft ist die Eignung des nachfolgend beschriebenen Verfahrens und der Vorrichtung zur Kalibrierung von ein, zwei und/oder mehreren Bildsensorsystemen, vorzugsweise Videosensoren in Kraftfahrzeugen. Diese Vielseitigkeit des Verfahrens und der Vorrichtung führt zu einer universellen Verwendbarkeit bei unterschiedlichen Konfigurationen von Bildsensorsystemen an einem Kraftfahrzeug, wobei ein, zwei oder auch mehrere Bildsensorsysteme eingebaut sein können und gleichzeitig eine unterschiedliche Ausrichtung der optischen Achsen der Bildsensorsysteme vorliegen kann.

Weitere Vorteile ergeben sich aus der nachfolgenden Beschreibung von Ausführungsbeispielen mit Bezug auf die Figuren und aus den abhängigen Patentansprüchen.

Zeichnung

Die Erfindung wird nachstehend anhand der in der Zeichnung dargestellten Ausführungsformen näher erläutert.
Es zeigen:

- Figur 1 eine Übersichtszeichnung der Vorrichtung zur Kalibrierung von zwei Bildsensorsystemen in einem Kraftfahrzeug,
- Figur 2 ein Blockdiagramm der Vorrichtung zur Kalibrierung von zwei Bildsensorssystemen mit einem Lagebezugsensor und einer Auswerteeinheit,
- Figur 3 ein Testfeld,
- Figur 4 ein Ablaufdiagramm des Verfahrens zur Kalibrierung von zwei Bildsensorsystemen.

Beschreibung von Ausführungsbeispielen

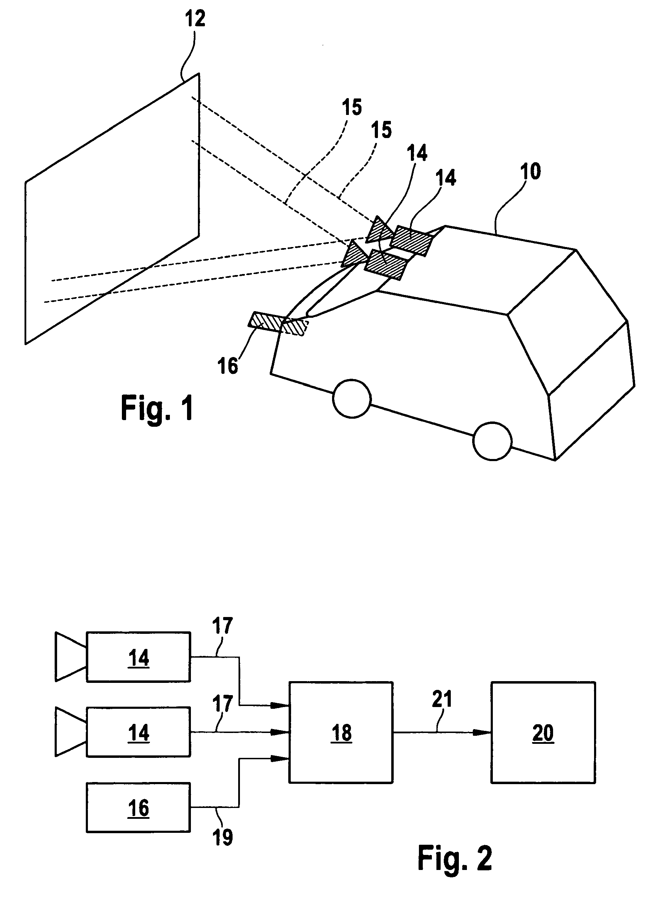

Figur 1 zeigt eine Übersichtszeichnung des bevorzugten Ausführungsbeispiels der Vorrichtung zur Kalibrierung von zwei Bildsensorsystemen 14, die sich in einem Kraftfahrzeug 10 hinter der Windschutzscheibe befinden, wobei das Kraftfahrzeug 10 so ausgerichtet ist, dass die Erfassungsbereiche 15 der zwei Bildsensorsysteme 14 das Testfeld 12 erfassen. Die Bildsensorsysteme 14 sind zueinander so ausgerichtet, dass sich Ihre Erfassungsbereiche 15 wenigstens teilweise überlappen. Weiterhin zeigt Figur 1 einen Lagebezugsensor 16, der ein fahrzeugeigener Radarsensor 16 ist, der am Kraftfahrzeug 10 befestigt ist, wobei der Radarsensor 16 geeignet ist, einen Wert zu bestimmen, der die Lage und/oder die Ausrichtung des Testfeldes 12 und des Bildsensorsystems 14 zueinander repräsentiert.

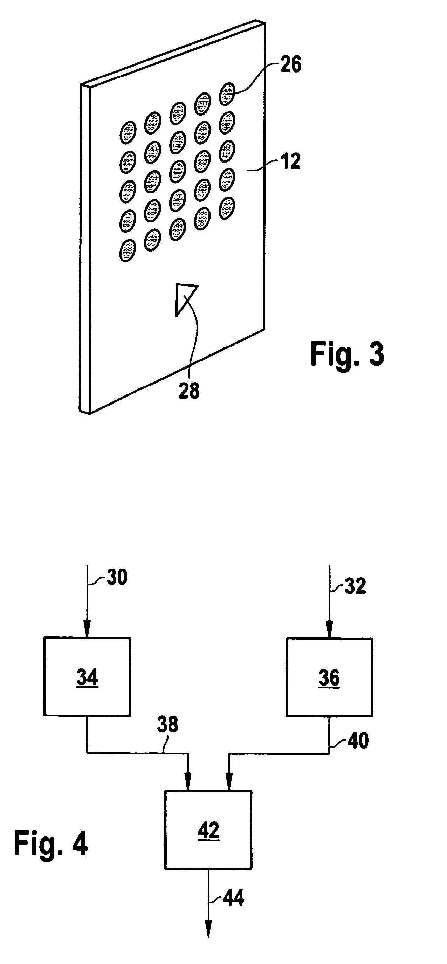

Figur 2 zeigt ein Blockdiagramm des bevorzugten Ausführungsbeispiels, bestehend aus zwei Bildsensorsystemen 14, einem Lagebezugsensor 16, einer Auswerteeinheit 18 und einem, vorzugsweise nachfolgenden, System 20. Die Bildsensorsysteme 14 sind im bevorzugten Ausführungsbeispiel Videosensoren, die beispielsweise entweder als CCD- oder CMOS-Kamera ausgeführt sind. Über die Signalleitungen 17 werden die Bilddatensätze an die Auswerteeinheit 18 elektrisch und/oder optisch übertragen. Alternativ ist eine Übertragung der Bilddatensätze per Funk möglich. Die Messdaten des Lagebezugsensors 16 werden über die Signalleitung 19 an die Auswerteeinheit 18 elektrisch und/ oder optisch übertragen. Alternativ ist auch hier die Übertragung der Messdaten per Funk möglich. In der Auswerteeinheit 18 werden aus den Bilddatensätzen der Bildsensorsysteme 14 und den Messdaten des Lagebezugssensors 16 die Kalibrierdaten ermittelt, die zur Kalibrierung der Bildsensorsysteme 14 verwendet werden. Die Kalibrierdaten werden über die Signalleitung 21 an ein System 20 elektrisch und/oder optisch übertragen. Alternativ ist hier ebenfalls die Übertragung der Kalibrierdaten per Funk möglich. Die Auswerteeinheit 18 besteht aus mehreren in Figur 4 dargestellten Modulen 34, 36 und 42, die im bevorzugten Ausführungsbeispiel als Programme wenigstens eines Mikroprozessors ausgestaltet sind. Im bevorzugten Ausführungsbeispiel werden als Kalibrierdaten zum einen extrinsische Kalibrierdaten, wie

- die geometrische Position wenigstens eines Bildsensorsystems 14 in Bezug zum Kraftfahrzeug und/oder
- der Nickwinkel wenigstens eines Bildsensorsystems 14 in Bezug zur Fahrachse des Kraftfahrzeugs und/oder
- der Gierwinkel wenigstens eines Bildsensorsystems 14 in Bezug zur Fahrachse des Kraftfahrzeugs und/oder
- der Wankwinkel wenigstens eines Bildsensorsystems 14 in Bezug zur Fahrachse des Kraftfahrzeugs und/oder
- die geometrische Position der Bildsensorsysteme 14 zueinander und/oder
- die Orientierung der optischen Achsen der Bildsensorsysteme 14 zueinander, und/oder intrinische Kalibrierdaten, wie
- die Kamerakonstante wenigstens eines Bildsensorsystems 14 und/oder
- der Kamerahauptpunkt wenigstens eines Bildsensorsystems 14 und/oder
- ein Verzeichnisparameter wenigstens eines Bildsensorsystems 14 ermittelt.

Unter dem Nickwinkel versteht man die vertikale Winkelabweichung der optischen Achse eines Bildsensorsystems 14 von der Fahrachse des Kraftfahrzeuges. Der Gierwinkel beschreibt die horizontale Winkelabweichung der optischen Achse eines Bildsensorsystems 14 von der Fahrachse des Kraftfahrzeuges. Unter dem Wankwinkel versteht man die Verdrehung eines Bildsensorsystems 14 um die optische Achse. Die Kalibrierdaten werden aus einem Bilddatensatz, der Bilddaten wenigstens eines Teils des Testfeldes enthält, und den Messdaten des Lagebezugsensors 16 gebildet. Während der Erzeugung des Bilddatensatzes und der Messdaten ist die relative Lage und Ausrichtung des Testfeldes zum Fahrzeug mit den daran befestigten Bildsensorsystemen 14 und dem ebenfalls daran befestigten Lagebezugsensor 16 unverändert. Im bevorzugten Ausführungsbeispiel ist das Testfeld als ebenes geometrisch bekanntes Testfeld gestaltet. Testfelder können entweder fest an einem Objekt montiert sein oder sie sind transportabel. Im bevorzugten Ausführungsbeispiel ist das Testfeld in einer Kraftfahrzeugwerkstatt oder in der Kraftfahrzeugfertigung fest an einer Wand montiert. Das Kraftfahrzeug wird vor das Testfeld gefahren. Die Entfernung der Bildsensorsysteme 14 zum Testfeld kann dabei beispielsweise zwischen einem Meter und 20 Meter betragen, wobei vorzugsweise Entfernungen zwischen zwei Meter und zehn Meter geeignet sind. Im bevorzugten Ausführungsbeispiel beträgt die Entfernung zwischen den Bildsensorsystemen 14 zum Testfeld etwa 2,5 Meter. Die schwierige exakte Fahrzeugpositionierung entfällt. Die Bildsensorsysteme 14 nehmen das Bild des Testfeldes als Bilddatensatz auf. Die Entfernung oder die Position des Testfeldes wird durch einen fahrzeugeigenen Radarsensor 16 bestimmt, der im Betrieb des Kraftfahrzeuges beispielsweise als Bestandteil des Adaptive Cruise Control (ACC) eingesetzt wird. Sowohl Messungen aus dem Bild als auch die Messungen aus dem Radarsensor 16 werden für die Bestimmung der Kalibrierdaten verwendet. Im bevorzugten Ausführungsbeispiel werden die Kalibrierdaten in der Auswerteeinheit 18 selbst gespeichert und weiterverwendet. Die Auswerteeinheit 18 erfüllt dabei mehrere Funktionen. Zum einen dient die Auswerteeinheit 18 zur geschilderten Ermittlung der Kalibrierdaten. Daneben wird die Auswerteeinheit 18 zur Auswertung der Bilddatensätze während des Einsatzes der Bildsensorsysteme 14 im Betrieb des Kraftfahrzeuges verwendet. Beispielsweise werden im bevorzugten Ausführungsbeispiel die Bildsensorsysteme 14 als Bestandteil des Adaptive Cruise Control (ACC) eingesetzt. Dabei werden die Bildsensorsysteme 14 verwendet, um im bevorzugten Ausführungsbeispiel zusammen mit dem Radarsensor 16 vorausfahrende Fahrzeuge zu erkennen und die Geschwindigkeit des Kraftfahrzeuges daran anzupassen. Daneben sind im bevorzugten Ausführungsbeispiel die Bildsensorsysteme 14 Teil eines Spurverlassenwarnungssystems. Bei dieser Anwendung wird der Fahrbahnverlauf durch die Bildsensorsysteme 14 ermittelt und eine Warnung an den Fahrzeugführer erzeugt, falls das Kraftfahrzeug die Fahrspur verlässt. In beiden geschilderten Anwendungen übernimmt im bevorzugten Ausführungsbeispiel die Auswerteeinheit 18 die Auswertung der Bilddaten und die Bereitstellung der geschilderten Funktionalität. Die Kalibrierdaten werden in beiden Anwendungen bei der Bereitstellung der Funktionen verwendet. Hierbei werden die gespeicherten Kalibrierdaten bei der Auswertung der Bilddatensätze eingesetzt. Daneben werden die Kalibrierdaten übertragen und in einem nachfolgenden System gespeichert, wobei im bevorzugten Ausführungsbeispiel das System ein Diagnosegerät ist und sich außerhalb des Kraftfahrzeuges befindet. Damit wird eine automatische Dokumentation des Kalibriervorganges durchgeführt. In einer Variante der Vorrichtung findet in, vorzugsweise nachfolgenden, Systemen 20 die Auswertung und/oder Weiterverarbeitung und/oder Anzeige und/oder Übertragung und/oder Speicherung der ermittelten Kalibrierdaten statt.

Figur 3 zeigt das im bevorzugten Ausführungsbeispiel verwendete Testfeld 12. Das Testfeld 12 kann sowohl räumliche als auch nur ebene Merkmale 26, 28 enthalten. Die Geometrie des Testfelds 12 und der Merkmale 26, 28 sind bekannt. Das Testfeld 12 ist konstruktiv so gestaltet, dass neben der optischen Messung im Bildsensorsystem eine gute Messbarkeit der geometrischen Position für den Radarsensor besteht. Auf dem Testfeld 12 befinden sich ein Kalibrierbezugmerkmale 26 und wenigstens ein Lagebezugmerkmal 28. Zur Ermittlung wenigstens eines Teils der Kalibrierdaten sind zwischen einem und beliebig vielen Kalibrierbezugmerkmale 26 vorhanden. Vorzugsweise werden zwischen 10 und 100 Kalibrierbezugmerkmale 26 eingesetzt. Im bevorzugten Ausführungsbeispiel werden 25 Kalibrierbezugmerkmale 26 verwendet, wobei deren Anordnung auf dem Testfeld 12 bekannt ist. Die Kalibrierbezugmerkmale 26 zeichnen sich aus durch einen großen Kontrast und/oder eine reflektierende Oberfläche und/oder eine besondere Form, wie beispielsweise eine Kreis- oder Quadratform. Im bevorzugten Ausführungsbeispiel werden schwarze Kreisflächen auf weißem Untergrund mit einem bekannten Durchmesser von etwa 5 cm verwendet, die im Abstand der Kreismittelpunkte von etwa 20 cm rechtwinklig angeordnet sind und damit ein Quadrat mit einer Kantenlänge von 1 m bilden. Ein Triple-Spiegel ist als Lagebezugmerkmal 28 auf dem Testfeld 12 angebracht. Triple-Spiegel zeichnen sich im allgemeinen durch drei zueinander senkrechten Reflexionsflächen aus, die eine parallele Rückstrahlung des einfallenden Radarstrahles ermöglichen, wobei der Radarstrahl in einem weiten Winkelbereich bezogen auf die Reflexionsflächen parallel zum einfallende Strahl reflektiert wird. Die Eignung des Triple-Spiegels liegt darin begründet, dass ein Radarsensor als Lagebezugsensor 16 verwendet wird.

Figur 4 zeigt ein Ablaufdiagramm des Verfahrens zur Kalibrierung der zwei Bildsensorsysteme des bevorzugten Ausführungsbeispiels. Im Modul 34 findet eine Auswertung des Bilddatensatzes 30 statt, der über die Signalleitungen vom den zwei Bildsensorsystemen zugeführt wird. Aus dem Bilddatensatz 30 werden Bildmerkmale 38 ermittelt. Diese Bildmerkmale 38 werden dem Modul 42 zur Weiterverarbeitung zugeführt. Im bevorzugten Ausführungsbeispiel werden im Modul 34 aus dem Bilddatensatz 30 die Bildmerkmale 38 so bestimmt, dass die Mittelpunkte aller i = 25 Kalibrierbe-zugmerkmale als Punkte $p_i = (x_{i1}, y_{i1}, x_{i2}, y_{i2})$ im Bilddatensatz der beiden Bildsensorsysteme 1 und 2 ermittelt werden. Die räumliche geometrische Anordnung der Kalibrierbezugmerkmale ist bekannt und durch den Parametersatz $P_{3D}$ beschrieben. In einem parallelen Verarbeitungsschritt wird im Modul 36 aus den Messdaten 32, die vom Lagebezugsensor über die Signalleitung der Auswerteeinheit zugeführt werden, ein Wert 40 gebildet, der die Lage und/oder die Ausrichtung des Testfeldes und des Bildsensorsystems zueinander repräsentiert. Durch einen fahrzeugeigenen Radarsensor werden mittels des Triple-Spiegels die Positionen $x_1' = (x_1, y_1, z_1)$ und $x_2' = (x_2, y_2, z_2)$ des Testfeldes zu den beiden Bildsensorsystemen 1 und 2 ermittelt, wobei die bekannte Einbauposition und die Ausrichtung des Radarsensors bezüglich des Kraftfahrzeuges, der Fahrachse und der Bildsensorsysteme berücksichtigt wird. Aus den Punkten $p_i$ und den Positionen $x_1'$ und $x_2'$ werden im Modul 42 die Kalibrierdaten 44 berechnet. Dazu wird zum einen ein Modell zur Beschreibung der optischen Abbildung aufgestellt, das die gemessenen Punkte $p_i$ als Funktion der intrinsischen Para-meter $P_{I1}$ und $P_{I2}$ der beiden Bildsensorsysteme 1 und 2, der absoluten Position und der Orientierung der Bildsensorsysteme 1 und 2 bezüglich des Testfeldes $P_{A1}$ und $P_{A2}$ und des Parametersatzes $P_{3D}$ beschreibt:

$$p_i = f_1(P_{I1}, P_{I1}, P_{A1}, P_{A1}, P_{3D}). \tag{1}$$

Gleichzeitig wird ein zweites Modell für die Positionsmessung aufgestellt, das die Position $x_1'$ als Funktion der Position und der Orientierung des Bildsensorsystems 1 bezüglich des Testfeldes $P_{A1}$ und eines Parameters $P_T$ für das Testfeld beschreibt:

$$x_1' = f_{P1}(P_{A1}, P_T). \tag{2}$$

Alternativ ist die Verwendung des äquivalenten Modells $x_2' = f_{P2}(P_{A2}, P_T)$ für das Bildsensorsystem 2 möglich oder die gemeinsame Verwendung der beiden Modelle als redundantes Berechnungsmodell. In einer anschließenden Ausgleichsrechnung wird durch eine Variation der Parameter $P_{A1}$, $P_{A2}$, $P_{I2}$ und $P_{I2}$ durch die Methode der kleinsten Quadrate aus den beiden Modellen nach Gleichung (1) und (2) diese gesuchten Parameter berechnet. Aus den Parametern $P_{A1}$ und $P_{A2}$ werden im bevorzugten Ausführungsbeispiel die extrinsischen Kalibrierdaten im Modul 42 berechnet:

- die geometrische Position der zwei Bildsensorsysteme in Bezug zum Kraftfahrzeug,
- die zwei Nickwinkel der zwei Bildsensorsysteme in Bezug zur Fahrachse des Kraftfahrzeuges,
- die zwei Gierwinkel der zwei Bildsensorsysteme in Bezug zur Fahrachse des Kraftfahrzeuges,
- die zwei Wankwinkel der zwei Bildsensorsysteme in Bezug zur Fahrachse des Kraftfahrzeuges,
- die geometrische Position der zwei Bildsensorsysteme zueinander und
- die Orientierung der optischen Achsen der zwei Bildsensorsysteme zueinander.

Aus den Parametern $P_{I1}$ und $P_{I2}$ des Modells werden im bevorzugten Ausführungsbeispiel die intrinische Kalibrierdaten im Modul 42 bestimmt:

- die zwei Kamerakonstanten der zwei Bildsensorsysteme,
- die zwei Kamerahauptpunkte der zwei Bildsensorsysteme und
- jeweils ein Verzeichnisparameter der zwei Bildsensorsysteme.

Das oben beschriebene Verfahren und die Vorrichtung zur Kalibrierung von zwei Bildsensorsystemen als bevorzugtes Ausführungsbeispiel ist auf eine Stereokamera übertragbar. Stereokameras bestehen aus zwei Bildsensorsystemen, die im wesentlichen dieselbe Szene aufnehmen.

Die Bestimmung der extrinsischen Kalibrierdaten der zwei Bildsensorsysteme im bevorzugten Ausführungsbeispiel, insbesondere die Bestimmung der relativen Position und der Ausrichtung der zwei Bildsensorsysteme zur Fahrachse des Kraftfahrzeuges und damit bei bekannter Einbauposition des Radarsensors zu diesem selbst, bildet die Grundlage zur Darstellung von Objekten, die von den zwei Bildsensorsystemen und vom Radarsensor getrennt ermittelt wurden, in einem gemeinsamen dreidimensionalen Koordinatensystem. Damit ist die gemeinsame redundante Nutzung von Daten von zwei unterschiedlichen Sensoren möglich.

Das beschriebene Verfahren und die Vorrichtung ist nicht auf ein einziges oder zwei Bildsensorsysteme in einem Kraftfahrzeug beschränkt. Vielmehr lässt sich die beschriebene Vorgehensweise mit den entsprechenden Merkmalen auch außerhalb der Kraftfahrzeugtechnik einsetzen, ferner bei Systemen mit mehr als zwei Bildsensorsystemen. Das Verfahren ist insbesondere bei Bildsensorsystemen mit gleicher und/oder unterschiedlicher Ausrichtung der optischen Achsen geeignet, wobei sich die Erfassungsbereiche wenigstens teilweise überlappen können, aber auch bei keiner Überlappung ist das Verfahren und die Vorrichtung zur Kalibrierung der Bildsensorsysteme geeignet. Die Bildsensorsysteme sind dabei am Kraftfahrzeug befestigt. Die optischen Achsen der Bildsensorsysteme können dabei ins Fahrzeuginnere und/oder nach außerhalb des Kraftfahrzeuges gerichtet sein. Vorraussetzung zur Durchführung des Verfahrens ist lediglich, dass das wenigstens eine Testfeld so gestaltet ist, dass die Bildsensorsysteme das Testfeld wenigstens teilweise erfassen können und dass jeweils ein Wert ermittelt werden kann, der die Lage und/oder die Ausrichtung des Testfeldes und des Bildsensorsystems zueinander repräsentiert. Daneben ist auch die Verwendung von mehr als einem Testfeld denkbar. Beispielsweise ist es möglich zwei Bildsensorsysteme durch zwei Testfelder zu kalibrieren, wobei durch jeweils einen Lagebezugsensor die Entfernung oder die Position jedes Bildsensorsystems zum jeweiligen Testfeld bestimmt wird. Dabei kann sich ein Bildsensorsystem beispielsweise im Kraftfahrzeug befinden, während das andere am Kraftfahrzeug angebracht ist. Weiterhin ist nicht notwendig, dass sowohl das Bildsensorsystem und der Lagebezugsensor das gesamte Testfeld vollständig erfassen. Vielmehr ist es ausreichend, wenn beispielsweise das Bildsensorsystem eine genügend große Zahl an Kalibrierbezugmerkmale detektieren kann und der Lagebezugsensor wenigstens ein Lagebezugmerkmal erfasst.

Das wenigstens eine Lagebezugmerkmal muss so angeordnet sein, dass es durch den Lagebezugsensor erfassbar ist. Dabei ist es denkbar ein, zwei oder mehr als zwei Lagebezugmerkmale zu verwenden. Das wenigstens eine Lagebezugmerkmal befindet sich dabei an dem Testfeld. Insbesondere ermöglicht die Verwendung von mehr als einem Lagebezugmerkmal die Gewinnung von zusätzlichen Information über die Ausrichtung und/oder die Lage des Testfeldes zum Bildsensorsystem. Beispielsweise ist es möglich durch einen Radarsensor, einem ebenen Testfeld und beliebig vielen Lagebezugmerkmale, die am Testfeld befestigt sind, die Genauigkeit der Bestimmung der räumlichen Position und der Ausrichtung des Testfeldes in Bezug zum Bildsensorsystem zu erhöhen.

Beispielsweise ist es ferner möglich zwei Radarsensoren zu verwenden, um die Genauigkeit der Kalibrierung des wenigstens einen Bildsensorsystems weiter zu erhöhen.

In einer weiteren Variante des beschriebenen Verfahrens und der Vorrichtung zur Kalibrierung des Bildsensorsystems, das sich an einem Kraftfahrzeug befindet, ist es insbesondere für alle Ausführungsbeispiele möglich, mehr als einen Bilddatensatz und/oder mehr als einen zugehörigen Wert, der die Lage und/oder die Ausrichtung des Testfeldes und des Bildsensorsystems zueinander repräsentiert, zur Auswertung heranzuziehen. Durch diese Maßnahme ist eine Erhöhung der Genauigkeit der Kalibrierung möglich. Dies kann entweder bei unveränderter relativen Position und/oder Ausrichtung des wenigstens einen Bildsensorsystem zu dem Testfeld erfolgen oder die relative Position und/oder die Ausrichtung des Bildsensorsystem zu dem Testfeld kann veränderlich sein. In der zweiten Variante wird in wenigstens zwei unterschiedlichen Positionen des Testfeldes in Bezug zum Bildsensorsystem jeweils wenigstens ein Bilddatensatz durch das Bildsensorsystem aufgenommen. Gleichzeitig wird durch den Lagebezugsensor jeweils ein Wert ermittelt, der die Lage und/oder die Ausrichtung des Testfeldes und des Bildsensorsystems zueinander repräsentiert. Bei Verwendung eines Bildsensorsystems, das sich an einem Kraftfahrzeug befindet, kann die Bewegung des Bildsensorsystems durch die Eigenbewegung des Kraftfahrzeuges verursacht sein. In diesem Fall ist es zweckmäßig im Kraftfahrzeug vorhandene zusätzliche Sensoren zur Durchführung der Kalibrierung und zur Ermittlung der Kalibrierdaten zu verwenden, welche die Fahrzeugbewegung zwischen den wenigstens zwei unterschiedlichen Positionen messen. Hierzu ist vorzugsweise wenigstens ein Radsensor und/oder wenigstens ein Lenkwinkelsensor geeignet.

In einer weiteren Variante des beschriebenen Verfahrens werden die ermittelten Kalibrierdaten zur manuellen mechanischen Einstellung der Einbauposition und/oder der Ausrichtung des Bildsensorsystems verwendet. Insbesondere beim Einsatz des Bildsensorsystems an einem Kraftfahrzeug werden beispielsweise die Kalibrierdaten über eine Anzeige einem Kraftfahrzeugmechaniker dargestellt, wobei der Kraftfahrzeugmechaniker die mechanische Einstellung des Bildsensorsystems basierend auf den Kalibrierdaten anschließend vornimmt.

Der Parameter $P_{3D}$ und/oder der Parameter $P_T$ ist entweder in der Auswerteeinheit fest gespeichert, vorzugsweise in einem ROM, oder der Parameter $P_{3D}$ und/oder der Parameter $P_T$ wird über eine Signalleitung in die Auswerteeinheit eingelesen. Insbesondere beim Einsatz eines Bildsensorsystems an einem Kraftfahrzeug werden in einer Variante des Verfahrens und der Vorrichtung diese Daten über eine Diagnoseeinrichtung, die mit der Auswerteeinheit direkt oder indirekt über zwischengeschaltete Systeme verbunden ist, eingelesen.

**Patentansprüche**

1. Verfahren zur Kalibrierung eines Bildsensorsystems (14), das sich vorzugsweise an einem Kraftfahrzeug (10) befindet, mittels eines Testfeldes (12),

   - wobei das Bildsensorsystem (14) das Testfeld (12) aufnimmt und das aufgenommene Testfeld (12) zur Kalibrierung verwendet wird, wobei das Testfeld (12) Kalibrierbezugmerkmale (26) mit bekannter räumlicher geometrischer Anordnung aufweist und das Bildsensorsystem (14) die Kalibrierbezugmerkmale (26) aufnimmt, wobei die aufgenommenen Daten der Kalibrierbezugmerkmale (26) zur Kalibrierung des Bildsensorsystems (14) verwendet werden,
   - wobei ein Wert, der die Lage und/oder die Ausrichtung des Testfeld (12) und des Bildsensorsystems (14) zueinander repräsentiert, durch einen Lagebezugsensor (16) ermittelt wird, wobei der Lagebezugsensor (16) wenigstens einen Teil des Testfeldes (12) erfasst,
   - wobei der Wert, der die Lage und/oder die Ausrichtung des Testfeldes (12)und des Bildsensorsystems (14) zueinander repräsentiert, zur Kalibrierung verwendet wird,

   **dadurch gekennzeichnet, dass** sich ein Triple-Spiegel (28) an dem Testfeld (12) befindet, der von einem als Radarsensor ausgebildeten Lagebezugsensor (16) detektiert wird.

2. Verfahren nach Anspruch 1, **dadurch gekennzeichnet, dass** Kalibrierdaten ermittelt werden.

3. Verfahren nach Anspruch 2, durch folgende Schritte **gekennzeichnet**:

   - Bestimmung des Wertes, der die Lage und/oder die Ausrichtung des Testfeldes (12) und des Bildsensorsystems (14) zueinander repräsentiert,
   - Aufnahme eines Bilddatensatzes des Testfeldes (12) durch das Bildsensorsystem (14),
   - Ermittlung der Kalibrierdaten des Bildsensorsystems (14) durch Auswertung des Wertes, der die Lage und/oder die Ausrichtung des Testfeldes (12) und des Bildsensorsystems (14) zueinander repräsentiert, und des Bilddatensatzes des Testfeldes (12),
   - Kalibrierung des Bildsensorsystems (14) mittels der ermittelten Kalibrierdaten und/oder Speicherung der Kalibrierdaten in einem nachfolgenden System.

4. Verfahren nach einem der vorhergehenden Ansprüche, **dadurch gekennzeichnet, dass** als Wert, der die Lage und/oder die Ausrichtung des Testfeldes (12) und des Bildsensorsystems (14) zueinander repräsentiert, die Entfernung und/oder die Position des Testfeldes (12) in Bezug zum Bildsensorsystem (14) durch den Lagebezugsensor (16) ermittelt wird.

5. Verfahren nach Anspruch 2, durch folgende Schritte **gekennzeichnet**:

   - Bestimmung jeweils eines Wertes, der die Lage und/oder die Ausrichtung des Testfeldes (12) und des Bildsensorsystems (14) zueinander repräsentiert, in wenigstens zwei unterschiedlichen Positionen des Testfeldes (12) in Bezug zu dem Bildsensorsystem (14),
   - Aufnahme jeweils eines Bilddatensatzes des Testfeldes (12) durch das Bildsensorsystem (14) in den zwei unterschiedlichen Positionen des Testfeldes (12) in Bezug zu dem Bildsensorsystem (14),
   - Ermittlung der Kalibrierdaten des Bildsensorsystems (14) durch Auswertung der jeweils einen Werte, welche die Lage und/oder die Ausrichtung des Testfeldes (12) und des Bildsensorsystems (14) zueinander repräsentieren, und des jeweils einen Bilddatensatzes des Testfeldes (12),
- Kalibrierung des Bildsensorsystems (14) mittels der ermittelten Kalibrierdaten und/oder Speicherung der Kalibrierdaten in einem nachfolgenden System.

6. Verfahren nach einem der Ansprüche 2 bis 5, **dadurch gekennzeichnet, dass** sich das Bildsensorsystem (14) in einem Kraftfahrzeug (10) befindet, wobei als Kalibrierdaten die geometrische Position des Bildsensorsystems (14) in Bezug zum Kraftfahrzeug (10) und/oder der Nickwinkel des Bildsensorsystems (14) in Bezug zum Kraftfahrzeug (10) und/oder der Gierwinkel des Bildsensorsystems (14) in Bezug zum Kraftfahrzeug (10) und/oder der Wankwinkel des Bildsensorsystems (14) in Bezug zum Kraftfahrzeug (10) und/oder die Kamerakonstante des Bildsensorsystems (14) und/oder der Kamerahauptpunkt des Bildsensorsystems (14) und/oder ein Verzeichnisparameter des Bildsensorsystems (14) ermittelt wird.

7. Verfahren nach einem der Ansprüche 2 bis 6, **gekennzeichnet durch** zwei Bildsensorsysteme (14), vorzugsweise eine Stereokamera, wobei als Kalibrierdaten die geometrische Position und/oder die Ausrichtung der zwei Bildsensorsysteme (14) zueinander ermittelt werden.

8. Vorrichtung zur Kalibrierung eines Bildsensorsystems (14), das sich vorzugsweise an einem Kraftfahrzeug (10) befindet, mittels eines Testfeldes (12),

   - wobei das Bildsensorsystem (14) so ausgerichtet ist, dass das Bildsensorsystem (14) das Testfeld (12) erfasst,
   - wobei das Testfeld (12) Kalibrierbezugmerkmale (26) aufweist, die sich an dem Testfeld (12) befinden, wobei die Kalibrierbezugmerkmale (26) zur Aufnahme durch das Bildsensorsystem (14) geeignet sind und die räumliche geometrische Anordnung der Kalibrierbezugmerkmale (26) bekannt ist,
   - mit einem Lagebezugsensor (16), der zur Bestimmung eines Wertes, der die Lage und/oder die Ausrichtung des Testfeldes (12) und des Bildsensorsystems (14) zueinander repräsentiert, geeignet ist,
   - wobei der Lagebezugsensor (16) so ausgerichtet ist, dass der Lagebezugsensor (16) wenigstens einen Teil des Testfeldes (12) erfasst,

   **dadurch gekennzeichnet, dass** sich ein Triple-Spiegel (28) an dem Testfeld (12) befindet, der durch einen als Radarsensor ausgebildeten Lagebezugsensor (16) detektierbar ist.

9. Vorrichtung nach Anspruch 8, **dadurch gekennzeichnet, dass** sich das Bildsensorsystem (14) an einem Kraftfahrzeug (10) befindet.

10. Vorrichtung nach einem der Ansprüche 8 oder 9, **gekennzeichnet durch** zwei Bildsensorsysteme (14), vorzugsweise eine Stereokamera.

**Claims**

1. Method for calibrating an image sensor system (14) which is preferably located on a motor vehicle (10), by means of a test field (12),

   - wherein the image sensor system (14) records the test field (12) and the recorded test field (12) is used for the calibration, wherein the test field (12) has calibration reference features (26) with a known spatial geometric arrangement, and the image sensor system (14) records the calibration reference features (26), wherein the recorded data of the calibration reference features (26) are used to calibrate the image sensor system (14),
   - wherein a value which represents the position and/or the orientation of the test field (12) and of the image sensor system (14) with respect to one another is acquired by means of a position reference sensor (16), wherein the position reference sensor (16) senses at least part of the test field (12),
   - wherein the value which represents the position and/or the orientation of the test field (12) and of the image sensor system (14) with respect to one another is used for the calibration, **characterized in that** a triple mirror (28) is located on the test field (12) which is detected by a position reference sensor (16) which is embodied as a radar sensor.

2. Method according to Claim 1, **characterized in that** calibration data are acquired.

3. Method according to Claim 2, **characterized by** the following steps:

- determination of the value which represents the position and/or the orientation of the test field (12) and of the image sensor system (14) with respect to one another,
- recording of an image data record of the test field (12) by means of the image sensor system (14),
- acquisition of the calibration data of the image sensor system (14) by evaluating the value which represents the position and/or the orientation of the test field (12) and of the image sensor system (14) with respect to one another, and of the image data record of the test field (12),
- calibration of the image sensor system (14) by means of the acquired calibration data and/or storage of the calibration data in a system arranged downstream.

4. Method according to one of the preceding claims, **characterized in that** the distance and/or the position of the test field (12) in relation to the image sensor system (14) is acquired by the position reference sensor (16) as a value which represents the position and/or the orientation of the test field (12) and of the image sensor system (14) with respect to one another.

5. Method according to Claim 2, **characterized by** the following steps:

- determination of in each case one value which represents the position and/or the orientation of the test field (12) and of the image sensor system (14) with respect to one another, in at least two different positions of the test field (12) in relation to the image sensor system (14),
- recording of in each case one image data record of the test field (12) by means of the image sensor system (14) in the two different positions of the test field (12) in relation to the image sensor system (14),
- acquisition of the calibration data of the image sensor system (14) by evaluating the respective values which represent the position and/or the orientation of the test field (12) and of the image sensor system (14) with respect to one another, and of the respective image data record of the test field (12),
- calibration of the image sensor system (14) by means of the acquired calibration data and/or storage of the calibration data in a system arranged downstream.

6. Method according to one of Claims 2 to 5, **characterized in that** the image sensor system (14) is located in a motor vehicle (10), wherein the geometric position of the image sensor system (14) in relation to the motor vehicle (10) and/or the pitch angle of the image sensor system (14) in relation to the motor vehicle (10) and/or the yaw angle of the image sensor system (14) in relation to the motor vehicle (10) and/or the rolling angle of the image sensor system (14) in relation to the motor vehicle (10) and/or the camera constant of the image sensor system (14) and/or the principal point of the camera of the image sensor system (14) and/or a reference parameter of the image sensor system (14) are acquired as the calibration data.

7. Method according to one of Claims 2 to 6, **characterized by** two image sensor systems (14), preferably a stereo camera, wherein the geometric position and/or the orientation of the two image sensor systems (14) with respect to one another are acquired as the calibration data.

8. Device for calibrating an image sensor system (14) which is preferably located on a motor vehicle (10), by means of a test field (12),

- wherein the image sensor system (14) is oriented in such a way that the image sensor system (14) senses the test field (12),
- wherein the test field (12) has calibration reference features (26) which are located on the test field (12), wherein the calibration reference features (26) are suitable for recording by the image sensor system (14), and the spatial geometric arrangement of the calibration reference features (26) is known,
- having a position reference sensor (16) which is suitable for determining a value which represents the position and/or the orientation of the test field (12) and of the image sensor system (14) with respect to one another,
- wherein the position reference sensor (16) is oriented in such a way that the position reference sensor (16) senses at least part of the test field (12),

**characterized in that** a triple mirror (28) is located on the test field (12) and can be detected by a position reference sensor (16) which is embodied as a radar sensor.

9. Device according to Claim 8, **characterized in that** the image sensor system (14) is located on a motor vehicle (10).

10. Device according to one of Claims 8 or 9, **characterized by** two image sensor systems (14), preferably a stereo camera.

**Revendications**

1.  Procédé de calibrage d'un système de capteur d'image (14) équipant de préférence un véhicule automobile (10) à l'aide d'un champ de calibrage (12) selon lequel

    - le système de capteur d'image (14) prend le champ d'essai (12) et utilise le champ d'essai (12) ainsi saisi pour le calibrage, le champ d'essai (12) ayant des caractéristiques de référence de calibrage (26) avec une répartition géométrique connue et le système de capteur d'image (14) prend les caractéristiques de références de calibrage (26), les données reçues des caractéristiques de références de calibrage (26) étant utilisées pour calibrer le système de capteur d'image (14),
    - à l'aide d'un capteur de position de référence (16), on détermine une valeur représentant la position et/ou l'alignement du champ d'essai (12) et du système de capteur d'image (14), le capteur de position de référence (16) saisissant au moins une partie du champ d'essai (12),
    - la valeur représentant la position et/ou l'alignement respectif du champ d'essai (12) et du système de capteur d'image (14) servant au calibrage,

    **caractérisé par**
    un miroir triple (28) installé dans le champ d'essai (12) et détecté par le capteur de position de référence (16) constitué par un capteur radar.

2.  Procédé selon la revendication 1,
    **caractérisé en ce qu'**
    on détermine les données de calibrage.

3.  Procédé selon la revendication 2, comprenant les étapes suivantes :

    - détermination de la valeur respective qui représente la position et/ou l'alignement du champ d'essai (12) et du système de capteur d'image (14),
    - prise d'un jeu de données d'image du champ d'essai (12) par le système de capteur d'image (14),
    - détermination des données de calibrage du système de capteur d'image (14) par l'exploitation de la valeur représentant la position et/ou l'alignement du champ d'essai (12) et du système de capteur d'image (14), par ses positions relatives et du jeu de données d'image du champ d'essai (12),
    - calibrage du système de capteur d'image (14) à l'aide des données de calibrage déterminées et/ou enregistrement des données de calibrage dans un système en aval.

4.  Procédé selon l'une des revendications précédentes,
    **caractérisé en ce que**
    comme valeur qui représente la position et/ou l'alignement du champ d'essai (12) et du système de capteur d'image (14), les uns par rapport aux autres on détermine l'éloignement et/ou la position du champ d'essai (12) par rapport au système de capteur d'image (14), par le capteur de position de référence (16).

5.  Procédé selon la revendication 2,
    **caractérisé par** les étapes suivantes :

    - détermination d'une valeur respective représentant la position relative et/ou l'alignement relatif du champ d'essai (12) et du système de capteur d'image (14), dans au moins deux positions différentes du champ d'essai (12) par rapport au système de capteur d'image (14),
    - prise de chaque fois un jeu de données d'image du champ d'essai (12) par le système de capteur d'image (14), dans les deux positions différentes du champ d'essai (12) par rapport au système de capteur d'image (14),
    - détermination des données de calibrage du système de capteur d'image (14) par l'exploitation de chaque fois une valeur représentant la position relative et/ou l'alignement relatif du champ d'essai (12) et du système de capteur d'image (14), et de chaque fois un jeu de données d'image du champ d'essai (12), calibrage du système de capteur d'image (14), à l'aide des données de calibrage déterminées et/ou enregistrement en mémoire des données de calibrage dans un système en aval.

**6.** Procédé selon l'une des revendications 2 à 5,
**caractérisé en ce que**
le système de capteur d'image (14) équipe un véhicule automobile (10) et comme données de calibrage on utilise la position géométrique du système de capteur d'image (14) par rapport au véhicule (10) et/ou l'angle de tangage du système de capteur d'image (14) par rapport au véhicule (10) et/ou l'angle de lacet du système de capteur d'image (14) par rapport au véhicule (10) et/ou l'angle de roulis du système de capteur d'image (14) par rapport au véhicule (10) et/ou la constante de caméra du système de capteur d'image (14) et/ou le point principal de la caméra du système de prise de vue (14) et/ou un paramètre de référence du système de capteur d'image (14).

**7.** Procédé selon l'une des revendications 2 à 6,
**caractérisé par**
deux systèmes de capteur d'image (14), de préférence une caméra stéréo et comme données de calibrage, on détermine la position géométrique et/ou l'alignement relatif des deux systèmes de capteur d'image (14).

**8.** Dispositif de calibrage d'un système de capteur d'image (14) équipant de préférence un véhicule automobile (10) à l'aide d'un champ d'essai (12)

- le système de capteur d'image (14) étant aligné pour qu'il saisisse le champ d'essai (12),
- le champ d'essai (12) comporte des caractéristiques de références de calibrage (26) qui se trouvent sur le champ d'essai (12), les caractéristiques de références de calibrage (26) permettant la réception dans le système de capteur d'image (14) et la disposition géométrique dans l'espace des caractéristiques de références de calibrage (26) étant connue,
- un capteur de position de référence (16) pour déterminer une valeur représentant la position et/ou l'alignement du champ d'essai (12) et du système de capteur d'image (14) l'un par rapport à l'autre,
- le capteur de position de référence (16) étant aligné pour qu'il saisisse au moins une partie du champ d'essai (12),

**caractérisé par**
un triple miroir (28) au niveau du champ d'essai (12) qui se détecte à l'aide d'un capteur de position de référence (16) réalisé sous la forme d'un capteur radar.

**9.** Dispositif selon la revendication 8,
**caractérisé en ce que**
le système de capteur d'image (14) équipe un véhicule automobile (10).

**10.** Dispositif selon l'une des revendications 8 à 9,
**caractérisé par**
deux systèmes de capteur d'image (14), de préférence une caméra stéréo.

Fig. 1

Fig. 2

**Fig. 3**

**Fig. 4**

**EP 1 376 051 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19962997 A1